(19) Europäisches Patentamt
European Patent Office
Office européen des brevets

(11) **EP 3 980 337 B1**

(12) **EUROPÄISCHE PATENTSCHRIFT**

(45) Veröffentlichungstag und Bekanntmachung des Hinweises auf die Patenterteilung:
**05.04.2023   Patentblatt 2023/14**

(21) Anmeldenummer: **20731025.1**

(22) Anmeldetag: **03.06.2020**

(51) Internationale Patentklassifikation (IPC):
**B64G 1/10** *(2006.01)*     **G01C 11/00** *(2006.01)*

(52) Gemeinsame Patentklassifikation (CPC):
**B64G 1/1021; G01C 11/00;** B64G 2001/1028

(86) Internationale Anmeldenummer:
**PCT/EP2020/065339**

(87) Internationale Veröffentlichungsnummer:
**WO 2020/245193 (10.12.2020 Gazette 2020/50)**

(54) **VERFAHREN ZUR BESTIMMUNG DER MÖGLICHKEIT DES ZUGRIFFS EINES IN EINEM SATELLITEN ENTHALTENEN SENSORS AUF EINE ZIELREGION UND SATELLITENZUGRIFFSYSTEM**

METHOD FOR DETERMINING THE CAPABILITY OF A SENSOR CONTAINED IN A SATELLITE TO ACCESS A TARGET REGION, AND SATELLITE ACCESSING SYSTEM

PROCÉDÉ DE DÉTERMINATION DE LA POSSIBILITÉ D'ACCÈS D'UN CAPTEUR CONTENU DANS UN SATELLITE À UNE RÉGION CIBLE ET SYSTÈME D'ACCÈS DE SATELLITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.06.2019   DE 102019208112**

(43) Veröffentlichungstag der Anmeldung:
**13.04.2022   Patentblatt 2022/15**

(73) Patentinhaber: **Fraunhofer-Gesellschaft zur Förderung
der angewandten Forschung e.V.
80686 München (DE)**

(72) Erfinder:
• **GULDE, Max**
  **79104 Freiburg (DE)**
• **HORCH, Clemens**
  **79104 Freiburg (DE)**
• **SCHÄFER, Frank**
  **79104 Freiburg (DE)**

(74) Vertreter: **Pfenning, Meinig & Partner mbB
Patent- und Rechtsanwälte
Theresienhöhe 11a
80339 München (DE)**

(56) Entgegenhaltungen:
**WO-A1-2011/089477     CN-A- 109 029 367**

• **YURI ULYBYSHEV: "Satellite Constellation Design for Complex Coverage", JOURNAL OF SPACECRAFT AND ROCKETS., Bd. 45, Nr. 4, 1. Juli 2008 (2008-07-01), Seiten 843-849, XP55723988, US ISSN: 0022-4650, DOI: 10.2514/1.35369 in der Anmeldung erwähnt**
• **JACOB ADRIAENS ET AL: "Optimal Worst-Case Coverage of Directional Field-of-View Sensor Networks", 2006 3RD ANNUAL IEEE COMMUNICATIONS SOCIETY CONFERENCE ON SENSOR AND AD HOC COMMUNICATIONS AND NETWORKS - 25 - 28 SEPT. 2006 - RESTON, VA, USA, IEEE, PISCATAWAY, NJ, USA, 1. Januar 2006 (2006-01-01), Seiten 336-345, XP031012150, ISBN: 978-1-4244-0626-5 in der Anmeldung erwähnt**
• **BESTE D C: "Design of Satellite Constellations for Optimal Continuous Coverage", IEEE TRANSACTIONS ON AEROSPACE AND ELECTRONIC SYSTEMS, IEEE SERVICE CENTER, PISCATAWAY, NJ, US, Bd. AES-10, Nr. 3, 1. Mai 1978 (1978-05-01), Seiten 466-473, XP011166419, ISSN: 0018-9251**

**(Forts. nächste Seite)**

- James Thomas Walton: "Models for the Management of Satellite-Based Sensors", PhD Thesis, Sloan School of Management, Massachusetts Institute of Technology, 1. Februar 1993 (1993-02-01), Seiten 1-180, XP55723999, Gefunden im Internet: URL:https://dspace.mit.edu/bitstream/handl e/1721.1/12546/28145097-MIT.pdf?sequence=2 [gefunden am 2020-08-20]

**Beschreibung**

Die Erfindung betrifft ein Verfahren und ein System zu Bestimmung der Möglichkeit des Zugriffs eines in einem Satelliten enthaltenen Sensors auf eine Zielregion. Dabei wird eine Position des Satelliten ermittelt, dann ein Sichtradius des Sensors in Richtung eines Zielreferenzpunktes in einer Zielregion bestimmt, eine Ausdehnung der Zielregion in Richtung eines Satellitenpositionspunktes ermittelt und bestimmt, dass die Möglichkeit des Zugriffs gegeben ist, wenn die Distanz zwischen dem Satellitenpositionspunkt und dem Zielreferenzpunkt in der Zielregion gleich oder kleiner ist als die Summe des Sichtradius des Sensors und der Ausdehnung der Zielregion in Richtung des Zielreferenzpunktes.

Fernerkundung aus dem Weltraum ist ein unschätzbar wertvolles Werkzeug, um den Zustand unseres Planeten quantitativ wie qualitativ zu erfassen und ermöglicht eine Vielzahl fundamentaler Anwendungen über fast alle Technologiesektoren hinweg [R. Sandau, "Status and trends of small satellite missions for Earth observation," Acta Astronaut., vol. 66, no. 1-2, pp. 1-12, 2010].

Im Vergleich zu bodengebundenen Technologien hat die Erdbeobachtung durch Satelliten vor allem den Vorteil, dass sehr große Flächen in kurzen Intervallen aufgenommen und analysiert werden können.

Es wird erwartet, dass gerade im Bereich der Kleinsatelliten mit einer Masse bis zu 500 kg eine enorme Marktexpansion stattfinden wird [Euroconsult, "Prospects for the Small Satellite Market," 2017.]: In den nächsten zehn Jahren wird der Start von etwa 7000 Klein- und Kleinstsatelliten erwartet, im Vergleich zu 1200 Satelliten innerhalb der letzten Dekade. Die Technologiebereiche reichen dabei von Kommunikation und Erdbeobachtung bis hin zu Schiffsverfolgung und IoT (internet of things) Anwendungen. Vor allem sollen mehrere Megakonstellationen aufgebaut werden, also Schwärme aus mehreren hundert bis einigen tausend Satelliten, die beinahe baugleich sind und gemeinsam dieselbe Aufgabe ausführen (bspw. Starlink und OneWeb). Dementsprechend groß ist der Markt: Bis 2027 wird ein geschätztes finanzielles Volumen von etwa 38 Mrd. $US allein für den Bau (60 %) und Start (40 %) von Kleinsatelliten benötigt.

Ein zentraler Parameter für das Design von homogenen sowie heterogenen Konstellationen ist die Abdeckungsqualität, also die erreichbare räumliche Auflösung am Boden und die Zeitcharakteristik des Sensorzugriffs [J. Adriaens, S. Megerian, and M. Potkonjak, "Optimal worst-case coverage of directional field-of-view sensor networks," 3rd Annu. IEEE Commun. Soc. Sens. Adhoc Commun. Networks, Secon 2006, vol. 1, no. C, pp. 336-345, 2007]. Homogene Konstellation bestehen dabei aus vielen Satelliten sehr ähnlichen oder sogar gleichen Typs, ein Beispiel wäre hier die Dove-Konstellation von Planet Labs. Im Gegensatz dazu bestehen heterogene Konstellationen aus einen Menge an beliebigen Satelliten, die im Verbund gemeinsam eine oder mehrere Aufgaben ausführen. Dies ist vor allem dann der Fall, wenn ein Informationsgewinn aus einer Datenfusion mehrerer Sensoren angestrebt wird (Smart Farming) oder Zeitkritikalität eine übergeordnete Rolle spielt (bspw. Katastrophenmanagement, militärische Anwendungen).

Jeder der sich im Orbit befindlichen Satelliten hat dabei seine eigene Position, Orientierung und Sensorausrichtung sowie spezifische Sensorparameter wie Sichtfeld (FoV, Field of View) oder Auflösung bei optischen Sensoren.

Für eine Anwendung (bspw. das Design einer Satellitenkonstellation) sollen eine oder mehrere Regionen $R_i$ durch sich im Orbit befindliche Sensoren $S_j$ erfasst werden. Speziell soll herausgefunden werden, welcher Sensor $S_j$ an Bord welches Satelliten welchen Anteil der Region $R_i$ in einem definierten Zeitintervall oder zu einem definierten Zeitpunkt beobachten kann. Des Weiteren ist von Interesse, zu welchen Zeitpunkten mehrere Sensoren $S_j$ (fast) zeitgleich die Möglichkeit haben, eine Region $R_i$ zu betrachten.

Es gibt eine Reihe von analytischen sowie numerischen Ansätzen, dieses Problem zu lösen.

Bei den analytischen Lösungen wird anhand von geometrischen Vereinfachungen versucht, die Abdeckung der Erdoberfläche durch einen generischen Sensor zu modellieren [D. C. Beste, "Design of Satellite Constellations for Optimal Continuous Coverage," IEEE Trans. Aerosp. Electron. Syst., vol. AES-14, no. 3, pp. 466-473, 1978], R. D. Lüders, "Satellite Networks for Continuous Zonal Coverage," ARS J., vol. 31, no. 2, pp. 179-184, 1961]. Ziel dabei ist es vor allem, eine Aussage über die relative Positionierung mehrerer Satelliten sowie die Anforderungen an deren Nutzlast zu treffen, um daraus Schlussfolgerungen über das Design einer Konstellation zu ziehen. Diese Methoden sind sehr schnell, ermöglichen jedoch in den genannten Beispielen nur geometrisch einfache, insbesondere kreisförmige, FoVs und basieren meistens auf denselben Sensorcharakteristika für alle beteiligte Satelliten. Anderenfalls werden die Rechnungen sehr schnell sehr unübersichtlich und numerische Methoden eignen sich besser zur Generierung einer Aussage.

Des Weiteren wird keine oder nur eine sehr einfache Propagation des Sensors über die Erdoberfläche vorgenommen, so dass zeitabhängige Aussagen schwer zu treffen sind. Es kann also nicht oder nur über Umwege berechnet werden, wann genau ein Sensor $S_j$ auf eine Zielregion $R_i$ Zugriff hat.

Aus diesem Grund wird häufig auf numerische Ansätze zurückgegriffen, um die Sensorabdeckung zu berechnen. Dazu wird das Zielgebiet $R_i$ in ein Netz von Teilgebieten $A_{i,k}$ unterteilt. Für jede der einzelnen Maschen k wird dann einzeln berechnet, ob sich diese im Sichtfeld des Sensors befindet oder nicht [J. Adriaens, S. Megerian, and M. Potkonjak, "Optimal worst-case coverage of directional field-of-view sensor networks," 3rd Annu. IEEE Commun. Soc. Sens. Adhoc Commun. Networsk, Secon 2006, vol. 1, no. C, pp. 336-345, 2007], P. Parraud, "OREKIT: AN OPEN SOURCE LIBRARY FOR OPERATIONAL FLIGHT DYNAMICS AP-PLICATIONS," 2010, Y. Ulybyshev, "Satellite Constellation Design for Complex Coverage," J. Spacecr. Rockets, vol. 45, no. 4, 2008]. Vorteil numerischer Ansätze ist der hohe mögliche geometrische wie physikalische Komplexitätsgrad, der simuliert werden kann. So ergibt sich die Möglichkeit, ein digitales Elevationsmodell mit einzubeziehen, um Abschattungen korrekt zu berücksichtigen (Bergtäler, Häuserschluchten). Zudem können je nach Sensortyp weitere Eigenschaften wie der atmosphärische Durchgang (bspw. durch Raytracing), Streulicht durch Sonnenreflexionen (elektrooptische Sensoren) oder Eigenleuchten (thermische Strahlung der Erdoberfläche) in die Berechnung mit einbezogen werden. Ein Nachteil der beschriebenen Methodik ist allerdings der hohe einhergehende Rechenaufwand für solche Netze, insbesondere bei einem geometrisch komplexen Sichtbereich des Sensors, eine hohe Anzahl betrachteter Satelliten oder großflächige Zielregionen. Aktuelle Software, die einen solchen Ansatz implementiert hat, bspw. AGI's System Tool Kit (STK), das CSIAPS-Tool der kanadischen DRDC oder die freien Open Source Bibliothek orekit, braucht deshalb lange Rechenzeiten für entsprechend aufwendige Analysen. Der Rechenaufwand steigt zudem quadratisch mit der Größe der Zielregion bei konstanter Genauigkeit der Berechnungen. So benötigt CSIAPS für den Zugriff während eines zu untersuchenden Intervalls von 72 h und etwa 100 Satelliten mehrere Stunden, um die Abdeckung zu berechnen. Zudem steigen die benötigten Ressourcen wie Arbeitsspeicher schnell mit der Zahl der zu untersuchenden Satelliten / Sensoren an.

Alternativ dazu kann das Problem invertiert werden und die Zugriffsanalyse aus Sicht des Ziels erfolgen [C.-Z. Lan, J.-S. Li, S.-J. Ma, and Q. Xu, "Prediction and analysis of orbital target's visibility based on space-based optics observation," Guangdian Gongcheng/Opto-Electronic Eng., vol. 35, no. 12, 2008.]. Auch hier ist es möglich, weitere physikalische Modelle mit einzubinden, um die Ergebnisse zu verbessern. Allerdings eignet sich dieser Ansatz am ehesten für Punktziele, größere Regionen bringen dieselben Nachteile wie traditionelle numerische Methoden mit sich.

Aufgabe der vorliegenden Erfindung ist es, eine schnelle Bestimmung von Möglichkeiten von potenziellen Sensorzugriffen zu ermöglichen und zu bewerten, bevorzugt für eine große Zahl an Satelliten. Vorzugsweise kann dabei die räumliche und zeitliche Abdeckung durch eine große Anzahl an beliebigen Sensortypen ermöglicht werden.

Die Aufgabe wird gelöst durch das Verfahren zur Bestimmung der Möglichkeit des Zugriffs eines in einem Satelliten enthaltenen Sensors auf eine Zielregion nach Anspruch 1 sowie durch das Satellitenzugriffssystem nach Anspruch 13. Die jeweiligen abhängigen Ansprüche geben vorteilhafte Weiterbildungen des erfindungsgemäßen Verfahrens zur Bestimmung der Möglichkeit des Zugriffs eines in einem Satelliten enthaltenen Sensors auf eine Zielregion und des Satellitenzugriffssystems an.

Erfindungsgemäß wird ein Verfahren angegeben, mit dem bestimmt wird, ob ein in einem Satelliten enthaltener Sensor die Möglichkeit hat, auf eine Zielregion zuzugreifen. Der Sensor ist dabei in dem Satelliten eingebaut und kann Messungen an oder auf der Erdoberfläche und/oder Atmosphäre vornehmen. Der in dem Satelliten enthaltene Sensor beobachtet also die Erde. Unter einem Sensorzugriff oder einem Zugriff des Sensors auf eine Zielregion wird dabei verstanden, dass der Sensor seine bestimmungsgemäße Beobachtung oder Messung in der Zielregion vornehmen kann. Ist beispielsweise der Sensor eine Kamera, so bedeutet dies, dass der Sensor Zugriff auf die Zielregion hat bzw. auf die Zielregion zugreifen kann, so dass er Bilder von der Zielregion aufnehmen kann. Die Zielregion ist dabei eine Teilfläche der Erdoberfläche.

Ein Sensor hat normalerweise ein Sichtfeld, welches jener Bereich auf der Erdoberfläche ist, den der Sensor bei gegebener Satellitenposition und gegebener Ausrichtung des Sensors beobachten kann, also jener Bereich, aus dem der Sensor bei gegebener Position des Satelliten und gegebener Ausrichtung des Sensors Messwerte oder Bilder aufnehmen kann. Als Betrachtungsfeld (Field of Regard (FoR)) soll jener Bereich bezeichnet werden, der dem Sensor bei gegebener Position des Satelliten zugänglich ist. Das Betrachtungsfeld ist also die Gesamtmenge aller Sichtfelder des Sensors bei gegebener Satellitenposition für alle infrage kommenden Ausrichtungen des Sensors.

Im erfindungsgemäßen Verfahren wird zunächst eine Position des Satelliten ermittelt. Es wird dann ermittelt, ob Sichtkontakt zwischen dem Satelliten und der Zielregion gegeben ist. Es wird also erfindungsgemäß bestimmt, ob eine direkte Sichtlinie zwischen dem Satelliten und der Zielregion gegeben ist. Dabei wird davon ausgegangen, dass nur, wenn Sichtkontakt gegeben ist, ein Sensorzugriff überhaupt möglich ist.

Unter der Zielregion soll hierbei ein Teilbereich der Erdoberfläche verstanden werden, auf den der Sensor zugreifen soll. In der Praxis ist es dann beispielsweise gewünscht, Messergebnisse des Sensors für einen bestimmten Bereich der Erdoberfläche, die Zielregion, zu erhalten. Das erfindungsgemäße Verfahren erlaubt es zu bestimmen, ob dies für die gegebene Zielregion zu einem gegebenen Zeitpunkt möglich ist oder nicht. Das erfindungsgemäße Verfahren kann vorteilhafterweise auch eingesetzt werden, um zu bestimmen, wann der Zugriff auf die Zielregion möglich ist.

Ist eine direkte Sichtlinie zwischen dem Satelliten und der Zielregion gegeben, so wird erfindungsgemäß wie folgt vorgegangen.

Es wird ein Winkel $\phi$ zwischen einer Satellitenreferenzrichtung und einer auf einen Zielreferenzpunkt in der Zielregion gerichteten Zielrichtung um einen von der Position des Satelliten abhängigen Satellitenpositionspunkt bestimmt. Die Satellitenreferenzrichtung kann dabei eine Richtung auf der Erdoberfläche sein, die bezüglich des Satelliten fest ist. Beispielsweise kann die Satellitenreferenzrichtung die Propagationsrichtung des Satelliten, also die Bewegungsrichtung des Satelliten bzw. deren Projektion auf die Erdoberfläche, sein. Insbesondere kann die Satellitenreferenzrichtung zum Beispiel die Bewegungsrichtung des Nadirs des Satelliten auf der Erdoberfläche sein.

Sofern in diesem Dokument auf die Erdoberfläche Bezug genommen wird, kann dies die tatsächliche Erdoberfläche meinen oder eine geeignete Näherung der Erdoberfläche, also beispielsweise eine an die Erdoberfläche angepasste Kugelform oder ein geeignetes Referenzellipsoid.

Der Zielreferenzpunkt kann grundsätzlich ein beliebiger Punkt innerhalb der Zielregion sein. Vorteilhaft kann der Zielreferenzpunkt der geometrische Schwerpunkt der Zielregion sein, sofern dieser innerhalb der Zielregion liegt. Die Zielregion ist hierbei vorzugsweise mathematisch einfach zusammenhängend, sollte also bevorzugt keine Löcher enthalten.

Der Winkel $\phi$ wird um einen von der Position des Satelliten abhängigen Satellitenpositionspunktes bestimmt. Es wird also angenommen, dass die Satellitenreferenzrichtung vom Satellitenpositionspunkt entspringt und dass die Zielrichtung ebenfalls vom Satellitenpositionspunkt entspringt. Der Winkel $\phi$ liegt dann zwischen diesen Richtungen vor. In einer vorteilhaften Ausgestaltung der Erfindung kann der Satellitenpositionspunkt der Nadir des Satelliten sein, also der Punkt auf der Erdoberfläche direkt unterhalb des Satelliten. Der Nadir ist dabei als jener Punkt auf der Erdoberfläche zu verstehen, der sich durch Projektion des Satelliten in Richtung senkrecht zur Erdoberfläche auf die Erdoberfläche ergibt.

Es wird nun erfindungsgemäß ein Sichtradius $R_{Sensor}(\phi)$ des Satelliten in Richtung des Winkels $\phi$ ausgehend vom Satellitenpositionspunkt bestimmt. Der Sichtradius $R_{Sensor}(\phi)$ ist also die maximale Distanz ausgehend vom Satellitenpositionspunkt, die der Sensor auf der Erdoberfläche bei gegebener Satellitenposition erreichen kann. Es wurde hier der Sichtradius $R_{Sensor}(\phi)$ als Sichtradius $R_{Sensor}(\phi)$ des Satelliten benannt. Dieser Sichtradius $R_{Sensor}(\phi)$ könnte auch als Sichtradius $R_{Sensor}(\phi)$ des Sensors bezeichnet werden.

Erfindungsgemäß wird außerdem ein Winkel $\gamma$ zwischen einer Referenzrichtung und einer auf den Satellitenpositionspunkt gerichteten Richtung um den Zielreferenzpunkt bestimmt. Die Referenzrichtung ist hierbei eine bezüglich der Zielregion oder der Erdoberfläche feste Richtung. Beispielsweise kann die Referenzrichtung die Nordrichtung sein. Der Zielreferenzpunkt ist der oben beschriebene Zielreferenzpunkt. Der Winkel $\gamma$ kann also vorteilhaft zwischen der Nordrichtung auf der Erdoberfläche als Referenzrichtung und einer von dem Zielreferenzpunkt auf den Nadir des Satelliten weisenden Richtung bestimmt werden. Der Nadir kann hier vorteilhaft der Satellitenreferenzpunkt sein.

Es kann nun eine Ausdehnung RoT $(\gamma)$ der Zielregion in Richtung des Winkels $\gamma$ ausgehend vom Zielreferenzpunkt bestimmt werden. Diese Ausdehnung RoT $(\gamma)$ beschreibt also die Distanz ausgehend vom Zielreferenzpunkt, über die sich die Zielregion in Richtung des Satellitenpositionspunktes erstreckt.

Somit wird erreicht, sowohl die Zielregion also auch den Sensorsichtbereich in Polarkoordinaten zu überführen. Dies erlaubt eine sehr einfache und akkurate mathematische Beschreibung der Gebiete auch bei aufwendigen geometrischen Formen (insbesondere wenn diese wie oben erwähnt mathematisch einfach zusammenhängend sind).

Es sei darauf hingewiesen, dass die Bestimmung der Winkel $\phi$ und $\gamma$ sowie die Bestimmung des Sichtradius $R_{Sensor}(\phi)$ und der Ausdehnung RoT $(\gamma)$ in beliebiger Reihenfolge und auch gleichzeitig erfolgen können.

Es kann nun bestimmt werden, ob die Möglichkeit des Zugriffs des Sensors auf die Zielregion gegeben ist. Dabei wird bestimmt, dass diese Möglichkeit gegeben ist, wenn eine Distanz zwischen dem Satellitenpositionspunkt und dem Zielreferenzpunkt kleiner oder gleich der Summe aus dem Sichtradius $R_{Sensor}(\phi)$ des Satelliten und der Ausdehnung RoT $(\gamma)$ der Zielregion in Richtung des Winkels $\gamma$, also in Richtung des Satellitenpositionspunktes, ist.

Es sei darauf hingewiesen, dass hier unter Abstand und Distanz stets Abstände und Distanzen auf der Erdoberfläche bzw. auf der verwendeten Näherung der Erdoberfläche zu verstehen sind. Wird die Erdoberfläche durch eine Kugel angenähert, so sind die Distanzen bzw. Abstände also die Längen von Kreisabschnitten von Großkreisen auf der Oberfläche der entsprechenden Kugel. Allgemein ist ein Abstand bzw. eine Distanz immer die kürzeste Verbindung auf der Erdoberfläche zwischen den fraglichen Punkten in der entsprechenden Annäherung.

In einer vorteilhaften Ausgestaltung der Erfindung kann zur Bestimmung des Sichtradius $R_{Sensor}(\phi)$ ein Betrachtungsbereich des Sensors durch eine Ellipse oder ein Polygon dargestellt werden. Die Ellipse oder das Polygon stellen eine Näherung des Betrachtungsbereichs dar. Der Betrachtungsbereich ist dabei wie beschrieben jener Bereich der Erdoberfläche, der für den Sensor von der Position des Satelliten aus erreichbar ist. Durch die Annäherung als Ellipse oder Polygon kann dann als Sichtradius $R_{Sensor}(\phi)$ der Abstand zwischen dem Satellitenreferenzpunkt und der Ellipse oder zwischen dem Satellitenreferenzpunkt und dem Polygon in Richtung des Winkels $\phi$ bestimmt werden. Diese Ausgestaltung ist sehr vorteilhaft, da es hierdurch möglich wird, den Sichtradius Rsensor $(\phi)$ mit einer sehr einfachen Berechnung zu ermitteln, wenn der Winkel $\phi$ bekannt ist. Das Darstellen des Betrachtungsbereichs durch eine Ellipse oder ein Polygon beschleunigt also die Bestimmung der Möglichkeit des Zugriffs deutlich.

In einer besonders vorteilhaften Ausgestaltung der Erfindung kann der Sichtradius $R_{Sensor}(\phi)$ bestimmt werden, indem auf eine Tabelle oder Funktion Bezug genommen wird, die Werte des Winkels $\phi$ Werten des Sichtradius zuordnet. Besonders bevorzugt ist es dabei, wenn die Tabelle oder die Funktion Werten des Winkels $\phi$ Referenzsichtradien RoR $(\phi)$ zuordnet. Es wird also der Winkel $\phi$ vorgegeben, und dann aus der Tabelle oder durch die Funktion der Referenzsichtradius RoR $(\phi)$ bestimmt.

Als Referenzsichtradius RoR $(\phi)$ ist dabei jener Sichtradius $R_{Sensor}(\phi)$ zu verstehen, den der Sensor hätte, wenn sich der Satellit in einer Referenzhöhe $a_{ref}$ befindet. Aus dem Referenzsichtradius RoR $(\phi)$ kann dann mittels der aktuellen Höhe a des Satelliten der Sichtradius $R_{Sensor}(\phi)$ berechnet werden als $R_{Sensor}(\phi) = RoR(\phi) \, a/a_{ref}$. Vorzugsweise kann die Tabelle oder die Funktion vor Beginn des Verfahrens erstellt werden. Diese Ausgestaltung der Erfindung ermöglicht ebenfalls eine deutliche Beschleunigung des erfindungsgemäßen Verfahrens, da die Zuordnung zwischen Werten des Winkels $\phi$ und den Sichtradien $R_{Sensor}(\phi)$ oder den Referenzsichtradien $RoR(\phi)$ nur einmal vor Beginn des Verfahrens ausgeführt werden muss. Im späteren Verlauf des Verfahrens muss also $R_{Sensor}(\phi)$ oder $RoR(\phi)$ nur noch aus der Tabelle abgelesen werden oder mittels der einfachen Funktion ermittelt werden. Als Funktion kommen alle Funktionen infrage, durch die sich vorgegebene Wertepaare annähern lassen, beispielsweise ein geeignetes Polynom.

In einer vorteilhaften Ausgestaltung der Erfindung kann die Ausdehnung $RoT(\gamma)$ der Zielregion in Richtung des Winkels $\gamma$ bestimmt werden, indem die Zielregion als Ellipse oder Polygon dargestellt wird. Es kann dann als Ausdehnung $RoT(\gamma)$ der Abstand zwischen dem Zielreferenzpunkt und dieser Ellipse bzw. diesem Polygon in Richtung des Winkels $\gamma$ bestimmt werden. Diese Ausgestaltung ermöglicht eine deutliche Beschleunigung des erfindungsgemäßen Verfahrens, da der genannte Abstand zwischen dem Punkt und der Ellipse oder dem Polygon durch einfache Rechnungen möglich ist. Die Darstellung der Zielregion als Ellipse oder Polygon kann eine Näherung der Zielregion darstellen, es ist aber auch möglich, die Zielregion von vornherein als Ellipse oder Polygon zu definieren. Der Abstand zwischen dem Zielreferenzpunkt und einer Ellipse oder einem Polygon ist mathematisch leicht und schnell zu bestimmen.

In einer besonders bevorzugten Ausgestaltung der Erfindung kann die Ausdehnung $RoT(\gamma)$ der Zielregion aus einer Tabelle oder einer Funktion ermittelt werden, in welcher Werte der Ausdehnung $RoT$ der Zielregion Werten des Winkels $\gamma$ zugeordnet sind. Die Tabelle oder die Funktion kann vorteilhaft vor Beginn des Verfahrens erstellt werden. Auch hierdurch wird eine deutliche Beschleunigung des Verfahrens erreicht, da aus einem gegebenen Winkel $\gamma$ die entsprechende Ausdehnung $RoT(\gamma)$ nur noch mittels Nachschlagen oder Auswertung einer einfachen Näherungsfunktion, wie beispielsweise eines Polynoms, ermittelt werden kann. Wird die Tabelle oder die Funktion vorgegeben, so braucht für die eigentliche Bestimmung der Zugriffsmöglichkeit keine komplizierte Berechnung mehr ausgeführt zu werden.

Das erfindungsgemäße Verfahren sieht vor, dass die Position des Satelliten ermittelt wird. Vorteilhaft kann diese Ermittlung zeitabhängig erfolgen. Da die Bahndaten von Satelliten normalerweise bekannt sind, existieren für die Positionsbestimmung eine Vielzahl von Möglichkeiten. Soll das Verfahren schnell durchgeführt werden bzw. die Berechnung einfach gehalten werden, so können zunächst Koordinaten des Satelliten zu einem ersten Zeitpunkt und zu einem zweiten Zeitpunkt ermittelt werden und die Positionen des Satelliten für eine Mehrzahl an Zeitpunkten zwischen dem ersten Zeitpunkt und dem zweiten Zeitpunkt bestimmt werden. Es kann dann für diese Mehrzahl der Zeitpunkte bestimmt werden, ob die Möglichkeit des Zugriffs gegeben ist. Es ist auch optional möglich, für weitere Positionen die Zugriffsmöglichkeit zu bestimmen, indem die Position des Satelliten zwischen zweien der Mehrzahl von Zeitpunkten interpoliert wird. Im einfachsten Fall kann der genannte erste Zeitpunkt jener Zeitpunkt sein, zu dem der Satellit vom Zielreferenzpunkt aus gesehen den Horizont überschreitet, also jener Zeitpunkt, zu dem der Satellit ausgehend vom Zielreferenzpunkt gesehen eine Elevation von 0° hat. Es ist aber auch möglich, als ersten Zeitpunkt einen späteren Zeitpunkt zu wählen, beispielsweise einen Zeitpunkt, zu dem der Satellit eine Elevation von 20° oder 30° hat, wodurch die Rechenzeit weiter verringert wird.

Als zweiter Zeitpunkt kann ein Zeitpunkt des Verschwindens des Satelliten hinter dem Horizont verwendet werden, also ein Zeitpunkt, zu dem der Satellit vom Zielreferenzpunkt aus gesehen wieder eine Elevation von 0° hat. Es kann aber auch ein früherer Zeitpunkt als zweiter Zeitpunkt verwendet werden, zu dem der Satellit vom Zielreferenzpunkt aus gesehen eine Elevation von 30°, vorzugsweise 20°, hat. Die optimale Elevation kann vorteilhaft vor Berechnung bestimmt werden, indem nachgeschlagen wird, wie groß der maximale Sichtwinkel der zu untersuchenden Satelliten sein kann. Ist dieser sehr klein, bspw. 10°, so kann mit einer entsprechend hohen Minimalelevation gerechnet werden (in diesem Fall also kleiner gleich 80°), um eine weitere Beschleunigung der Prozedur zu ermöglichen.

In einer vorteilhaften Ausgestaltung der Erfindung kann eine Überlappung bzw. eine Überlappungsfläche zwischen einem Betrachtungsbereich FoR des Satelliten und der Zielregion bestimmt werden. In einer besonders bevorzugten Ausgestaltung kann diese Überlappungsfläche als Überlappungsfläche eines Kreises mit dem Radius $R_{Sensor}(\Phi)$ um den Satellitenpositionspunkt und eines Kreises mit dem Radius $RoT(\gamma)$ um den Zielreferenzpunkt berechnet werden. Die Größe der Überlappungsfläche kann also abgeschätzt werden als Schnittmenge dieser zwei Kreise. Die Überlappung kann sich dann als Fläche der zwischenliegenden Linse als Funktion des Abstands beider Kreismittelpunkte, welches gerade die genannte Distanz zwischen dem Satellitenpositionspunkt und dem Zielreferenzpunkt ist, ergeben. Die Überlappung A kann beispielsweise wie - folgt abgeschätzt werden:

$$A_1 = RoT_{Avg}^2 \, acos \left( \frac{D_{ji}^2 + RoT(\gamma)^2 - R_{Sensor}(\phi)^2}{2 D_{ji} RoT(\gamma)} \right)$$

$$A_2 = RoR^2 \, acos\left(\frac{D_{ji}^2 + R_{Sensor}\,(\phi)^2 - RoT(\gamma)^2}{2D_{ji}R_{Sensor}(\phi)}\right)$$

$$A_3 = \left(-D_{ji} + RoT(\gamma) + R_{Sensor}(\phi)\right)\left(D_{ji} + RoT(\gamma) - R_{Sensor}(\phi)\right)\left(D_{ji} - RoT(\gamma) + R_{Sensor}(\phi)\right)\left(D_{ji} + RoT(\gamma) + R_{Sensor}(\phi)\right)$$

$$A = A_1 + A_2 - \frac{1}{2}\sqrt{A_3}$$

Je nach Komplexität der Flächengeometrien kann hierdurch die Überlappung abgeschätzt werden. Da die projizierte Position des Satelliten, also der Satellitenpositionspunkt, sowieso Unsicherheiten unterliegt, ist die Genauigkeit des Überlapps meistens ausreichend. Er kann einen wichtigen Hinweis auf zu erwartende Überlappung geben und vor allem darauf, ob diese nur einen geringen Teil der Zielregion betrifft und damit möglicherweise für einen Nutzer nicht von Interesse ist.

In einer vorteilhaften Ausgestaltung der Erfindung kann das Verfahren außerdem eine Bestimmung einer aktuellen Auflösung des Sensors, hier als Res abgekürzt, umfassen. Die aktuelle Auflösung des Sensors kann dann genähert werden als

$$Res = \frac{Res_{Ref}\sqrt{D_{ji}^2 + a^2}}{a_{Ref}}$$

wobei $Res_{Ref}$ eine Auflösung des Sensors bei einer Referenzhöhe $a_{ref}$ des Satelliten ist, a die aktuelle Höhe des Satelliten ist und $D_{ij}$ ein Abstand zwischen dem Zielreferenzpunkt $i$ und dem aktuellen Satellitenpositionspunkt j, gemessen auf der Erdoberfläche. Auf diese Weise kann ein Nutzer nicht nur bestimmen, ob ein Satellitenzugriff zu einer gegebenen Zeit möglich ist, sondern auch, ob hierbei die gewünschte Genauigkeit oder Auflösung erzielt werden kann.

Das erfindungsgemäße Verfahren kann vorteilhaft so ausgeführt werden, dass ein Sollzeitpunkt vorgegeben wird und dann die Position des Satelliten sowie der Winkel $\phi$, der Sichtradius $R_{Sensor}$ $(\phi)$ und der Winkel $\gamma$ zum Sollzeitpunkt bestimmt werden. Es kann auf diese Weise bestimmt werden, ob die Möglichkeit des Zugriffs des in dem Satelliten enthaltenen Sensors auf die Zielregion zum Sollzeitpunkt gegeben ist. Es ist aber auch möglich, das Verfahren so auszuführen, dass bestimmt wird, zu welchen Zeitpunkten die Zugriffsmöglichkeit gegeben ist, oder so dass bestimmt wird, zu welchem Zeitpunkt die Zugriffsmöglichkeit beginnt und zu welchem Zeitpunkt sie endet. Unabhängig davon, wie das Verfahren ausgeführt wird, können für die betrachteten Zeitpunkte jeweils die vorstehend beschriebenen Schritte ausgeführt werden.

Das Verfahren kann vorteilhaft auch als Ergebnis ausgeben, dass keine Möglichkeit des Zugriffs gegeben ist, wenn bestimmt wird, dass zum betrachteten Zeitpunkt keine direkte Sichtlinie zwischen dem Satelliten und der Zielregion oder zwischen dem Satelliten und dem Zielreferenzpunkt gegeben ist. Auf diese Weise können einzelne Satelliten oder auch ganze Konstellationen, in denen schon keine Sichtlinie besteht, schnell von weiteren Betrachtungen ausgenommen werden.

Erfindungsgemäß wird außerdem ein Satellitenzugriffssystem angegeben, das die Bestimmung der Möglichkeit des Zugriffs eines in einem Satelliten enthaltenen Sensors auf eine Zielregion ermöglicht. Dieses Satellitenzugriffssystem weist erfindungsgemäß eine Positionsermittlungseinheit auf, mit der zumindest eine Position des Satelliten ermittelbar ist. Das Satellitenzugriffssystem weist außerdem eine Überlappungsbestimmungseinheit, auch als Zugriffsmöglichkeitsbestimmungseinheit benennbar, auf, die eingerichtet ist, einen Winkel $\phi$ zwischen einer Satellitenreferenzrichtung und einer auf einen Zielreferenzpunkt in der Zielregion gerichteten Zielrichtung um einen von der Position des Satelliten abhängigen Satellitenpositionspunkt zu bestimmen. Die Überlappungsbestimmungseinheit ist außerdem eingerichtet, einen Sichtradius $R_{Sensor}$ $(\phi)$ des Satelliten in Richtung des Winkels $\phi$ ausgehend vom Satellitenpositionspunkt zu bestimmen. Sie ist außerdem eingerichtet, einen Winkel $\gamma$ zwischen einer Referenzrichtung und einer auf den Satellitenpositionspunkt gerichteten Richtung um den Zielreferenzpunkt zu bestimmen und eine Ausdehnung RoT $(\gamma)$ der Zielregion in Richtung des Winkels $\gamma$ ausgehend vom Zielreferenzpunkt zu bestimmen.

Die Überlappungsbestimmungseinheit ist dann eingerichtet, zu bestimmen, dass die Möglichkeit des Zugriffs gegeben ist, wenn eine Distanz zwischen dem Satellitenpositionspunkt und dem Zielreferenzpunkt kleiner oder gleich der Summe aus dem Sichtradius $R_{Sensor}(\phi)$ des Satelliten und der Ausdehnung RoT ($\gamma$) der Zielregion in Richtung des Winkels $\gamma$ ist.

Die Positionsermittlungseinheit und/oder die Überlappungsbestimmungseinheit können dabei durch einen Computer und/oder zur Durchführung der genannten Schritte programmierten Prozessor oder Prozessoreinheit gebildet sein. Solche Einheiten können beispielsweise allgemein als Kontrolleinheiten bezeichnet werden.

Bevorzugterweise ist das erfindungsgemäße Satellitenzugriffssystem eingerichtet, das vorstehend beschriebene Verfahren zur Bestimmung der Möglichkeit des Zugriffs eines in einem Satelliten enthaltenen Sensors auf eine Zielregion auszuführen.

Im Folgenden soll die Erfindung anhand einiger Figuren beispielhaft erläutert werden.

Es zeigt:

Fig. 1 ein Betrachtungsfeld eines Satelliten,
Fig. 2 ein durch ein Polygon beschriebenes Betrachtungsfeld,
Fig. 3 eine durch ein Polygon beschriebene Zielregion,
Fig. 4 ein Betrachtungsfeld eines Satelliten im Verlauf der Zeit sowie ein Zielgebiet,
Fig. 5 eine schematische Darstellung eines Beispiels des erfindungsgemäßen Verfahrens,
Fig. 6 eine schematische Darstellung einer Berechnung eines Überlapps, und
Fig. 7 eine beispielhafte Darstellung von Zugriffsmöglichkeiten einer Vielzahl von Satelliten im Verlauf eines Tages.

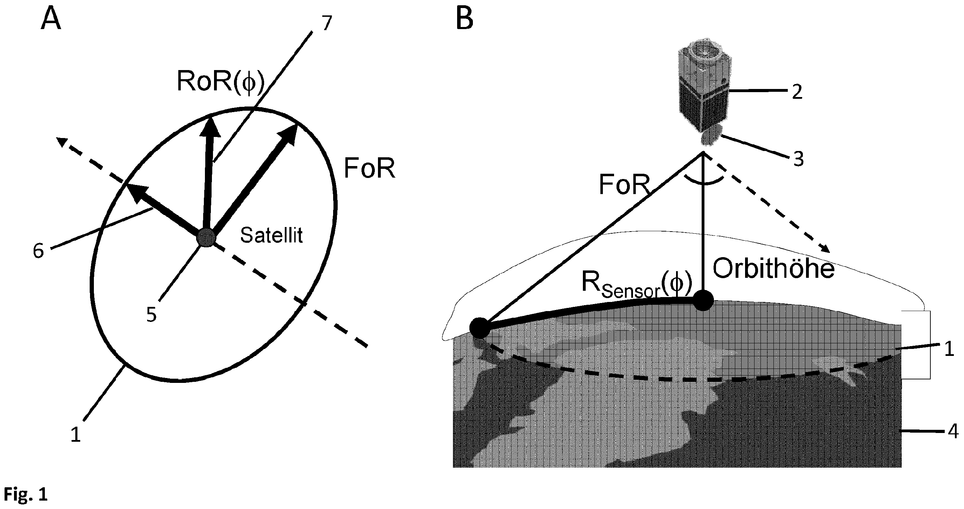

Fig. 1 zeigt ein Betrachtungsfeld FoR 1 eines Satelliten 2. Dabei zeigt Teilfigur 1A eine Aufsicht und Teilfigur 1B eine perspektivische Ansicht. Das Betrachtungsfeld 1 ist jener Bereich, der für einen Sensor 3 des Satelliten 2 bei einer gegebenen Position des Satelliten zugänglich ist, auf den also der Sensor zugreifen kann. Im in Fig. 1 gezeigten Beispiel ist der Betrachtungsbereich 1 durch eine Ellipse angenähert, die sich auf der Oberfläche der Erde 4 um einen Nadir 5 des Satelliten erstreckt. Der Nadir 5 stellt dabei einen Satellitenpositionspunkt auf der Erdoberfläche 4 dar. Eine auf einen Zielreferenzpunkt 9 in einer Zielregion 8 gerichtete Zielrichtung 7 schließt mit einer Satellitenreferenzrichtung 6, die beispielsweise die Richtung der Bewegung des Nadir 5 auf der Erdoberfläche sein kann, einen Winkel $\phi$ ein. Der Abstand zwischen dem Satellitenreferenzpunkt 5 und der Außengrenze des Betrachtungsbereichs 1, hier also der Ellipse 1, wird als Referenzsichtradius RoR ($\phi$) bezeichnet. Der Referenzsichtradius RoR ($\phi$) ist dabei der Abstand zwischen dem Satellitenpositionspunkt 5 und dem Rand des Betrachtungsbereichs, wenn sich der Satellit 2 in einer Referenzhöhe $a_{ref}$ befindet.

Die Referenzhöhe $a_{ref}$ ist in Fig. 1B als Orbithöhe eingezeichnet. Befindet sich der Satellit 2 in einer beliebigen Höhe a, so kann der Abstand zwischen dem Satellitenpositionspunkt 5 und der sich daraus ergebenden Grenze des Betrachtungsbereichs 1 als $R_{Sensor}(\Phi) = RoR(\phi)\, a/a_{ref}$ aus RoR ($\phi$) in guter Näherung berechnet werden.

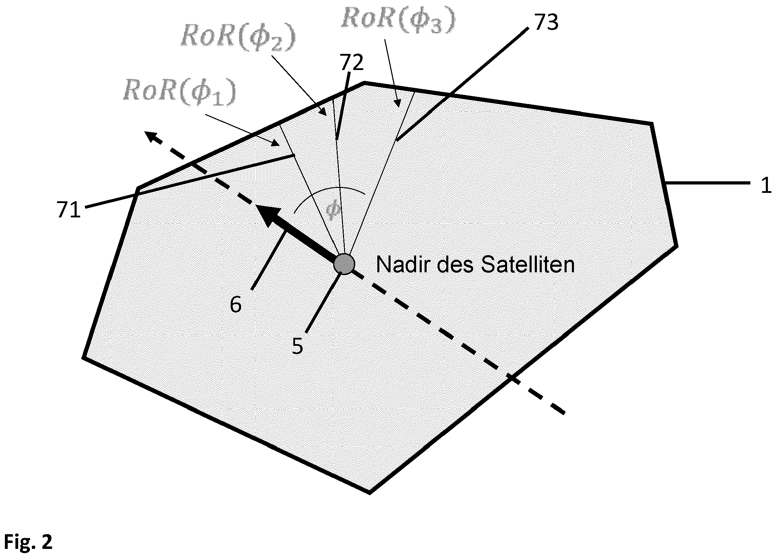

In Fig. 1 ist der Betrachtungsbereich 1 des Satelliten 2 durch eine Ellipse angenähert. Fig. 2 zeigt ein Beispiel, das eine höhere Genauigkeit erzielt. Hier ist der Betrachtungsbereich 1 durch ein Polygon, also ein von geraden Teilstrecken umschlossenen Bereich, angenähert. Im in Fig. 2 gezeigten Beispiel sind drei Sichtrichtungen 71, 72 und 73 eingezeichnet, die unterschiedlichen Winkeln $\phi_1$, $\phi_2$ und $\phi_3$ entsprechen. Der entsprechende Sichtradius $R_{Sensor}(\phi)$ bzw. RoR ($\phi$) ergibt sich jeweils als Abstand zwischen dem Satellitenreferenzpunkt 5 und dem entsprechenden Abschnitt des Polygons in der Richtung 71, 72 bzw. 73, also zwischen dem Satellitenreferenzpunkt und dem Schnittpunkt einer in der entsprechenden Richtung verlaufenden Geraden und dem Polygon. Da ein Polygon technisch zumeist über seine Eckpunkte definiert wird, können diese auch direkt als Ankerpunkte für die Bestimmung von RoR genutzt werden.

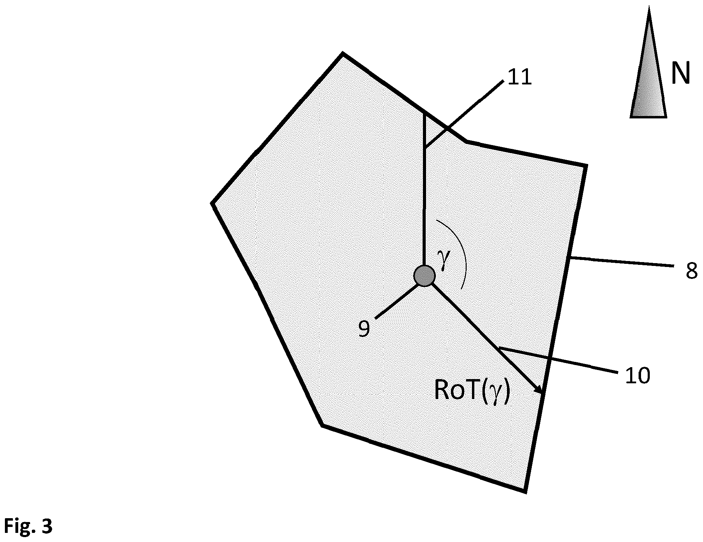

Fig. 3 zeigt ein Beispiel einer Zielregion, die hier durch ein Polygon dargestellt ist. Das Polygon ist im gezeigten Beispiel aus sechs Teilstrecken zusammengesetzt, welche die Zielregion 8 umschließen. Eine auf den Satellitenpositionspunkt 5 gerichtete Richtung 10 wird hier als Winkel $\gamma$ in Bezug auf eine Referenzrichtung 11, hier die Nordrichtung, um einen Zielreferenzpunkt 9 angegeben. Aus dem Winkel $\gamma$ kann dann eine Ausdehnung RoT($\gamma$) der Zielregion in Richtung des Winkels ausgehend vom Zielreferenzpunkt 9 bestimmt werden. Die Ausdehnung in Richtung des Winkels $\gamma$ ist dabei die Ausdehnung in der Richtung, die im Winkel $\gamma$ zur Referenzrichtung 11 steht. Diese Ausdehnung RoT($\gamma$) ist der Abstand zwischen dem Zielreferenzpunkt 9 und dem Polygon 8 in der besagten Richtung in Richtung des Satellitenpositionspunktes 5.

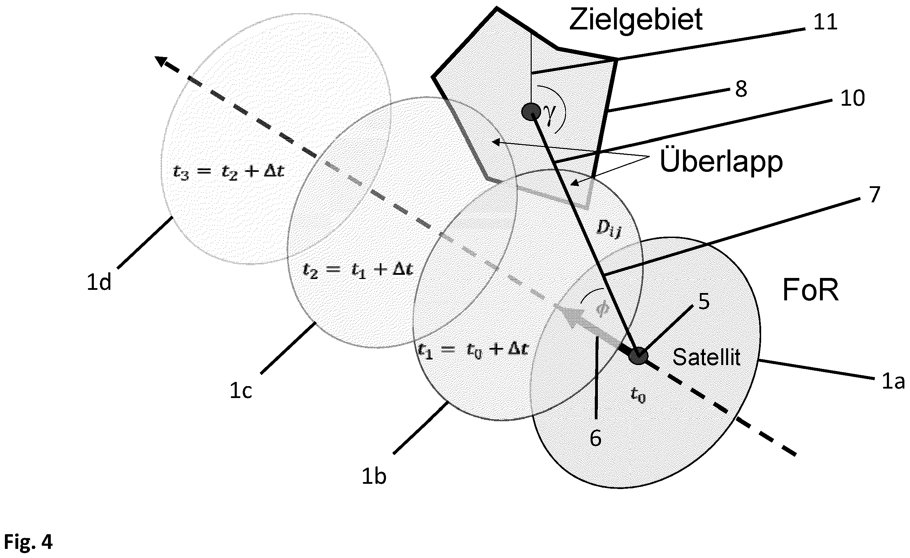

Fig. 4 zeigt vier Betrachtungsbereiche 1a, 1b, 1c, 1d zu unterschiedlichen Zeitpunkten $t_0$, $t_1$, $t_2$ und $t_3$, während der Satellit sich bewegt. Während der Zeitpunkte $t_1$ und $t_2$ überlappt der Betrachtungsbereich 1 des Satelliten ein Zielgebiet 8. Der Zielreferenzpunkt 9 erscheint von der Position des Nadir 5 des Satelliten aus in Richtung des Winkels $\phi$ gegenüber der Propagationsrichtung 6 des Satelliten. Der Nadir 5 des Satelliten erscheint aus Sicht des Zielreferenzpunktes 9 im Winkel $\gamma$ gegenüber der Nordrichtung 11. Der Abstand zwischen dem Satellitenreferenzpunkt, also dem Nadir, 5 und dem Zielreferenzpunkt 9 ist in Fig. 4 als $D_{ij}$ 7 bezeichnet. Bei einer gegebenen Position des Satelliten 2 ist ein Zugriff des Satelliten auf das Zielgebiet 8 dann möglich, wenn der Betrachtungsbereich 1 das Zielgebiet 8 überlappt.

Dies kann beispielsweise dadurch bestimmt werden, dass der Abstand $D_{ij}$ bestimmt wird. Ist dieser Abstand $D_{ij} \leq RoT(\gamma) + R_{Sensor}(\phi)$, dann überlappt der Betrachtungsbereich 1 und das Zielgebiet 8 und ein Zugriff des Sensors auf das Zielgebiet 8 ist möglich. Der Sensor kann also beispielsweise Messwerte aus dem Zielgebiet 8 messen oder das Zielgebiet 8 aufnehmen, beispielsweise als optischer Sensor. Im in Fig. 4 gezeigten Beispiel ist dies zu den Zeitpunkten $t_1$ und $t_2$ der Fall, während zu den Zeitpunkten $t_0$ und $t_3$ kein Überlapp zwischen dem Betrachtungsbereich 1 und dem Zielgebiet 8 gegeben ist. Wird also das erfindungsgemäße Verfahren zu den Zeitpunkten $t_1$ oder $t_2$ ausgeführt, so ergibt sich, dass die Möglichkeit des Zugriffs gegeben ist. Zu den Zeitpunkten $t_0$ oder $t_3$ würde sich hingegen ergeben, dass die Möglichkeit des Zugriffs nicht gegeben ist.

Das Verfahren kann, wie in Fig. 4 gezeigt, so durchgeführt werden, dass zu einer Vielzahl an Zeitpunkten $t_0$, $t_1$, $t_2$, $t_3$ jeweils in der erfindungsgemäßen Weise be-stimmt wird, ob die Möglichkeit des Zugriffs gegeben ist. Auf diese Weise kann bestimmt werden, wann die Möglichkeit des Zugriffs gegeben ist, hier zu den Zeitpunkten $t_1$ und $t_2$. Im gezeigten Beispiel sind die Zeitpunkte jeweils um einen Abstand $\Delta t$ voneinander zeitlich beabstandet. Da das erfindungsgemäße Verfahren eine sehr schnelle Berechnung erlaubt, kann $\Delta t$ sehr klein gewählt werden. Soll das Verfahren weiter beschleunigt werden, so kann $\Delta t$ vergrößert werden. Es ist außerdem möglich, die Schrittweite $\Delta t$ dynamisch anzupassen, indem sie mit der Differenz zwischen Abstand $D_{ij}$ und der Radiensumme $RoT(\gamma) + R_{Sensor}(\phi)$ skaliert wird. Bei großer Differenz können große Schrittweiten gewählt werden, bei kleinen Differenzen entsprechend genauere.

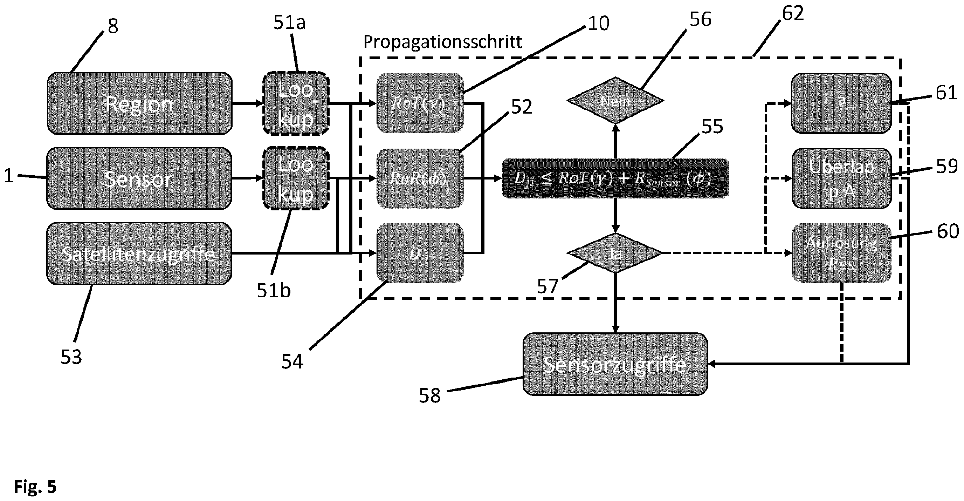

Fig. 5 zeigt schematisch das erfindungsgemäße Verfahren. Dabei wird die Zielregion 8 sowie Sensorparameter (Auflösung, Sichtfeld, etc.) vorgegeben. Hieraus ergibt sich für die Zielregion 8 ein Winkel $\gamma$, wie oben beschrieben, und für den Betrachtungsbereich 1 des Sensors ein Winkel $\phi$. Mittels des Winkels $\gamma$ kann unter Verwendung beispielsweise einer Nachschlagetabelle 51a die Ausdehnung $RoT(\gamma)$ 10 ermittelt werden. Aus dem Winkel $\phi$ kann mittels einer weiteren Nachschlagetabelle 51b und der aktuellen Bahnhöhe 53 sowie dem ROR $(\phi)$ 52 ein Sichtradius $R_{Sensor}(\phi)$ 52 bestimmt werden. Vorgegeben wird außerdem, als Satellitenzugriffsmöglichkeit 53, ob eine Sichtlinie zwischen dem Satelliten und der Zielregion 8, beispielsweise dem Zielreferenzpunkt 9, besteht. Es kann dann in einem Schritt 54 der Abstand (zu einer gegebenen Zeit) zwischen dem Satellitenreferenzpunkt 5 und dem Zielreferenzpunkt 9 als $D_{ji}$ bestimmt werden. Es wird dann ein Vergleich 55 ausgeführt, in dem bestimmt wird, ob $D_{ji} \leq RoT(\gamma) + R_{Sensor}(\phi)$ ist. Ist dies nicht der Fall, so kann als Ergebnis 56 bestimmt werden, dass keine Möglichkeit des Zugriffs auf die Zielregion gegeben ist. Ist andererseits diese Bedingung erfüllt, so kann als Ergebnis 57 bestimmt werden, dass der Zugriff des Sensors auf die Zielregion möglich ist. Es kann also der Sensorzugriff 58 erfolgen. Ergibt die Entscheidung 57, dass die Zugriffsmöglichkeit gegeben ist, so kann optional außerdem in einem Schritt 59 eine Fläche des Überlappungsbereichs A bestimmt werden und/oder eine Auflösung 60 bestimmt werden. Auch weitere den Sensorzugriff mögliche charakterisierende Größen 61 können optional so bestimmt werden.

Der gestrichelte Kasten in Fig. 5 kennzeichnet, welche Schritte für jeden der Propagationsschritte, wie sie beispielsweise in Fig. 4 gezeigt sind, ausgeführt werden. Vorteilhaft ist, wenn $RoT(\gamma)$ 10 und $RoR(\phi)$ 52 durch Verwendung beispielsweise von Nachschlagetabellen 51a, 51b erhalten werden können, da hierdurch nur noch wenige, sehr schnell ausführbare Berechnungen innerhalb des Propagationsschrittes 62 erforderlich sind. Auf diese Weise kann das Verfahren sehr schnell ausgeführt werden.

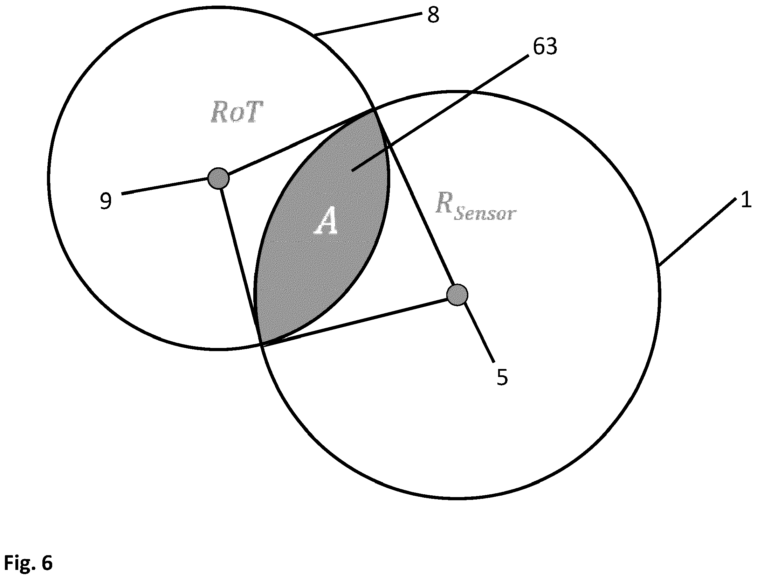

Fig. 6 zeigt ein Beispiel, wie die Fläche eines Überlappungsbereichs 63 zwischen dem Zielgebiet 8 und dem Betrachtungsbereich 1 abgeschätzt werden kann. Hierbei kann vorteilhaft sowohl das Zielgebiet 8 als auch der Sensorbetrachtungsbereich 1 durch einen Kreis angenähert werden. Die Überlappungsfläche zwischen zwei Kreisen kann wie oben beschrieben berechnet werden, wobei vorteilhaft davon ausgegangen werden kann, dass sich der Betrachtungsbereich und das Zielgebiet auf einer ebenen Oberfläche erstrecken. Für die meisten Anwendungen ist die Genauigkeit des Überlapps nicht entscheidend, da es nur um eine grobe Abschätzung geht, ob die Überlappung überhaupt hinreichend groß ist, um für die beabsichtigte Anwendung von Nutzen zu sein.

Im Folgenden soll nochmals ein Beispiel eines erfindungsgemäßen Ablaufes im Detail wiedergegeben werden.

Für die Berechnung der Zugriffscharakteristik eines Sensors können folgende Informationen vorgegeben werden:

- Die Bewegung des Satelliten, an Bord dessen sich der Sensor befindet, speziell dessen Koordinaten beim Über- und Unterschreiten des Horizonts (zur Propagation mit State of the Art Software).

- Die Zeitspanne, in welcher die Zugriffsanalyse erfolgen soll. Normalerweise liegt die Zeitspanne im Bereich weniger Tage, da die Genauigkeit der TLEs mit der Zeit abnimmt (etwa 1-2 Sekunden Verlust an Genauigkeit pro 48 h).

- Die Region, in welcher der Sensorzugriff analysiert werden soll. Diese wird beispielsweise durch ein Polygon dargestellt.

- Die Sensorcharakteristika: Geometrie der Sensorfläche am Boden bei einer Referenzhöhe des Satelliten.

- Je nach Anwendungsfall optional weitere physikalische Modelle, bspw. zur Elevation oder Atmosphäre oder die maximale Sensorauflösung in Nadir

In einem ersten Schritt werden die zu betrachtenden Satelliten propagiert und der Sichtkontakt zwischen Satellit und Zielregion_berechnet. Diese Berechnung ist geometrisch wenig anspruchsvoll und kann durch existierende Softwarelösungen erfolgen (bspw. Orekit oder STK). Konkret berechnet werden die zeitlichen und räumlichen Koordinaten des Satelliten, wenn dieser aus Sicht des Zielgebiets über dem Horizont erscheint und wieder verschwindet.

Innerhalb einer Softwareimplementierung kann an dieser beispielsweise der Zugriff zum geometrischen Schwerpunkt des Zielgebiets als Startpunkt genutzt werden. Ist die Ausdehnung des Zielgebiets so groß, dass zu erwarten wäre, bei Zugriff zum Gebietsschwerpunkt bereits Sensorzugriff zu erhalten, so können stattdessen mehrere Punkte, bspw. auf der Kontur des Zielgebiets liegend, in die Berechnung mit einbezogen werden. Der Schritt der Satellitenpropagation und Bestimmung der Anfangs- und Endkoordinaten des Satellitenzugriffs (Sichtlinie zwischen Satellit und Zielregion vorhanden) sind Teil des Standes der Technik.

Die erhaltenen Satellitenzugriffe (Ort und Zeit von Beginn und Ende der Zugriffe) werden zusammen mit den Sensorcharakteristika in einem zweiten Schritt weitergeleitet zur Sensorpropagation und Berechnung der Abdeckung. Diese erfolgt z. B. schrittweise zwischen Anfangspunkt und Endpunkt des Satellitenzugriffs (Position des Satelliten mit Längen- und Breitengrad sowie Orbitalhöhe). Die Position des Satelliten wird dabei in kleinen Zeitschritten zwischen Start und Ende des Satellitenzugriffs propagiert und für jeden Zeitschritt durch den unten angegebenen Algorithmus berechnet, ob ein Überlapp zwischen den Sensoren an Bord des Satelliten und der Zielregion besteht. An dieser Stelle sei angemerkt, dass es eine Reihe von Möglichkeiten gibt, die Anzahl der Propagationsschritte zu verringern und damit eine Softwareimplementierung weiter zu beschleunigen. So kann bspw. durch Anwendung eines Runge-Kutta-Verfahrens die Schrittweite dynamisch angepasst werden, indem nach den ersten paar Schritten eine Schätzung für den ersten Kontakt zwischen Sensorsichtfeld und Zielfläche durchgeführt wird.

Bevor auf den Algorithmus eingegangen wird, noch eine kurze Erklärung zweier in dessen Kontext wichtiger Begriffe: dem Field of View (FoV) und dem Field of Regard (FoR). Der sich direkt unterhalb des Satelliten befindliche Punkt wird als "Nadir" bezeichnet. Zu einem bestimmten Zeitpunkt ist der Sensor in eine definierte Richtung ausgerichtet, die Projektion des Sensors auf die Erdoberfläche, also sein momentanes Sichtfeld, wird als FoV bezeichnet. Da der Satellit und der Sensor zumeist seine Ausrichtung ändern kann, kann sich die Lage des FoVs entsprechend ändern. Das Integral über alle möglichen FoVs wird als FoR bezeichnet und ist je nach Sensortyp unterschiedlicher Form.

In dem skizzierten Fall kann das FoR durch zwei Parameter bestimmt werden, die kurze $RoR_{along}$ und lange $RoR_{across}$ Halbachsen der dargestellten Ellipse. Referenzrichtung ist hierbei z. B. die Propagationsrichtung des Satelliten.

In Fig. 1 ist das FoR als Ellipse angedeutet, allgemeiner ist es ein beliebiges Polygon (Fig. 2). Durch die Anwendung von Polarkoordinaten kann ein solches Polygon geometrisch angenähert werden.

Vorteilhaft sind die folgenden geometrischen Vereinfachungen, die den Rechenaufwand für den Sensorkontakt drastisch reduzieren.

1. Die Sensorfläche wird auf einen richtungs- und höhenabhängigen Parameter reduziert. Ist der Winkel $\phi$ und die aktuelle Höhe $a$ des Satelliten zwischen Zielregion und Propagationsrichtung des Satelliten bekannt, kann über $RoR(\varphi)$ somit sofort der entsprechende Sensorradius $R_{Sensor}$ berechnet werden.

$$R_{Sensor}(\phi) = RoR(\phi)\, a/a_{ref}$$

wobei

$$RoR(\phi) = \sqrt{(RoR_{across}\sin\phi)^2 + (RoR_{along}\cos\phi)^2}$$

im Fall der Ellipse wie in Fig. 1 dargestellt. Der Radius wird dabei mit der Referenzhöhe des Satelliten $a_{ref}$ skaliert. Der Übergang in Polarkoordinaten hat den Vorteil, dass sich eine Verfeinerung der Auflösung (durch Verkleinerung der Winkelschritte) linear auf den Rechenaufwand auswirkt. Bei netzbasierten Methoden ist die Abhängigkeit quadratisch.

2. Analog dazu wird die Beschreibung der Zielregion $R_i$ auf einen winkelabhängigen Parameter, den Zielradius (RoT, Radius of Target) reduziert. Der Winkel wird z. B. zwischen der Nordrichtung und der Satellitenposition gemessen.
Innerhalb einer Softwareimplementierung brauchen $RoR(\phi)$ und $RoT(\gamma)$ lediglich einmal zu Anfang der Berechnung bestimmt zu werden und können bspw. durch die Verwendung einer Nachschlagetabelle ohne erneute Berechnung abgefragt werden. Zwischen einzelnen Tabellenwerten zu Winkeln kann dann interpoliert werden, um eine höhere Genauigkeit zu erzielen.

3. Um eine Überlappung zwischen Sensor Sj und Zielregion Ri festzustellen, wird die Distanz $D_{ji}$ zwischen der projizierten Satellitenposition auf der Erdoberfläche und dem Referenzpunkt (z.B. geometrischer Mittelpunkt) des Radius RoT des Zielgebiets bestimmt. Die Distanz wird dabei z. B. entlang der entsprechenden Großkreises der Erdkugel berechnet, bspw. unter Verwendung von Vincentys Algorithmus [T. Vincenty, "DIRECT AND INVERSE SOLUTIONS OF GEODESICS ON THE ELLIPSOID WITH APPLICATION OF NESTED EQUATiONS," Surv. Rev., vol. 23, no. 176, pp. 88-93, 1975.]
Ist sie kleiner als die Summe von $R_{Sensor}$ und RoT unter dem entsprechenden Winkel, überlappen beide Flächen.

Zugriff erfolgt also, falls $D_{ji} \leq RoT(\gamma) + R_{Sensor}(\phi)$

Es soll noch einmal betont werden, dass die geometrische Näherung der projizierten Sensorfläche sowie der Zielgebietsfläche lediglich einmal vor Durchlauf der Sensorpropagation durchgeführt werden muss. Für jeden Zeitschritt werden dann lediglich die Winkel $\gamma$ und $\phi$ bestimmt und anhand dieser sowie der aktuellen Höhe $a$ festgestellt, ob ein Überlapp gegeben ist.

Die Vorgehensweise ist in Fig. 4 und nochmals schematisch dargestellt. Fig. 4 verbildlicht dabei die Propagation, Fig. 5 stellt eine programmatische Implementierung vor.

Zu Fig. 5: Linker Hand sind die Eingangsdaten angegeben. Das Erstellen einer Nachschlagetabelle 51a, 51b (Lookup) ist optional. Für jeden Propagationsschritt (gestrichelter Kasten 62) wird aus dem Zielradius 10, dem Sensorradius 52 und der Distanz 54 zwischen Satellit und Region bestimmt, ob ein Zugriff erfolgt. Optional werden weitere Parameter wie Überlapp A oder Auflösung Res bestimmt. Die Zugriffe werden dann zur Weiterverarbeitung ausgegeben.

Für manche Anwendungen kann es vorteilhaft sein, weitere Charakteristika des Sensorkontakts zu bestimmen, z. B.:

1. Die Größe der Überlappung A kann abgeschätzt werden durch die Schnittmenge zwischen zwei Kreisen mit den Radien $R_{sensor}(\phi)$ und $RoT(\gamma)$ (Fig. 6). Die Überlappung ergibt sich als die Fläche der zwischenliegenden Linse als Funktion des Abstands beider Kreismittelpunkte $D_{ji}$ welcher bereits im vorangegangenen Schritt 54 berechnet wurde.

$$A_1 = RoT_{Avg}^2 \ acos\left(\frac{D_{ji}^2 + RoT(\gamma)^2 - R_{Sensor}(\phi)^2}{2D_{ji}RoT(\gamma)}\right)$$

$$A_2 = RoR^2 \ acos\left(\frac{D_{ji}^2 + R_{Sensor}(\phi)^2 - RoT(\gamma)^2}{2D_{ji}R_{Sensor}(\phi)}\right)$$

$$A_3 = \left(-D_{ji} + RoT(\gamma) + R_{Sensor}(\phi)\right)\left(D_{ji} + RoT(\gamma) - R_{Sensor}(\phi)\right)\left(D_{ji} - RoT(\gamma) + R_{Sensor}(\phi)\right)\left(D_{ji} + RoT(\gamma) + R_{Sensor}(\phi)\right)$$

$$A = A_1 + A_2 - \frac{1}{2}\sqrt{A_3}$$

Je nach Komplexität der Flächengeometrie kann hierdurch der Überlapp mehr oder weniger genau abgeschätzt werden. Da die projizierte Position des Satelliten sowieso Unsicherheiten unterliegt, ist die Genauigkeit des Überlapps zumeist nicht entscheidend. Es kann aber einen wichtigen Hinweis auf die zu erwartende Überdeckung geben und vor allem darauf, ob diese nur einen geringen Teil des Zielgebiets betrifft und damit eventuell gar nicht von Interesse für den Nutzer ist.

2. Bei optischen Sensoren skaliert die Auflösung linear mit der optischen Pfadlänge. Diese kann aus $D_{ji}$ und Orbithöhe im Verhältnis zu Referenzwerten $Res_{Ref}$ und $\alpha_{Ref}$ abgeschätzt werden.

$$Res = \frac{Res_{Ref}\sqrt{D_{ji}^2 + a^2}}{a_{Ref}}$$

Die Vorteile der Erfindung gegenüber existierenden Verfahren sind beispielsweise wie folgt:

1. **Implementierung:** Die Lösung ist einfach in eine Software zu implementieren und besitzt eine hohe Parallelisierbarkeit.

2. **Qualität:** Gegenüber bisherigen analytischen Verfahren können auch komplizierte Zielregion- und Sichtfeld-Geometrien bearbeitet werden.

3. **Detail:** Gegenüber analytischen Verfahren können detaillierte zeit- und ortsabhängige Aussagen getroffen werden. Eine Berechnung von wichtigen physikalischen Parametern wie erreichbare Auflösung oder Abdeckungsgrad ist einfach möglich.

4. **Skalierbarkeit:** Im Gegensatz zu numerischen Verfahren steigt die Rechenzeit nicht quadratisch, sondern linear mit der Größe der Zielregion unter Beibehaltung der Genauigkeit.

5. **Geringe Komplexität:** Die Reduzierung der Anzahl der charakterisierenden Kenngrößen auf drei Distanzen erlaubt eine drastische Erhöhung der Berechnungsgeschwindigkeit gegenüber Netz-basierten, numerischen Verfahren.

6. **Universelle Einsetzbarkeit:** Die Vereinfachung des Sensormodells erlaubt eine schnelle Implementierung vielen Satelliten, ohne eine Software entsprechend anpassen zu müssen.

7. **Aussagen in Echtzeit:** Durch die Vereinfachung der Berechnungen können Aussagen in Echtzeit auch bei der Berücksichtigung von hunderten von Satelliten getroffen werden, was neue und verbesserte Anwendungen ermöglicht.

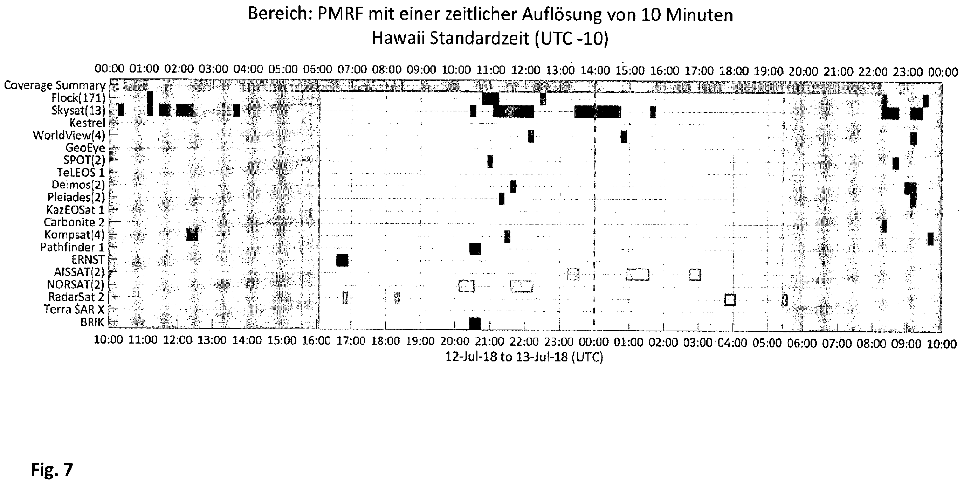

Fig. 7 zeigt die Zugriffsmöglichkeiten einer Reihe von auf der vertikalen Achse aufgetragenen Satelliten im Verlauf eines Tages, der entlang der horizontalen Achse aufgetragen ist. Ein Rechteck in der in Fig. 4 gezeigten Darstellung bedeutet, dass der entsprechende Satellit in der entsprechenden Zeit, wo das Rechteck gezeigt ist, eine Möglichkeit des Zugriffs auf das Zielgebiet hat, das hier ein Ort auf Hawaii ist. Grau hinterlegt ist hier der Nachtbereich gegenüber dem nicht grau hinterlegten Tagbereich. Die Uhrzeiten sind UTC angegeben. Die oberste Zeile der Fig. 7 unterhalb der Uhrzeiten gibt die Zusammenfassung aller Zugriffsmöglichkeiten an. Hier ist sofort zu erkennen, ob einer der Satelliten Zugriff hat oder keiner der Satelliten.

Durch die hohe Geschwindigkeit der Methodik kann diese für schrittweise Optimierungsverfahren eingesetzt werden, um neue Konstellationen zu simulieren und bestmöglich anzupassen. Durch die universelle Anpassbarkeit der Methodik an verschiedene Sensorkonfigurationen können verschiedene Modelle schnell durchgespielt und entsprechend angepasst werden.

Des Weiteren existieren viele Anwendungsfälle, in denen Zeitkritikalität eine übergeordnete Rolle spielt. Dies kann bei der Unterstützung eines militärischen Einsatzes oder im Krisen- und Katastrophenmanagement der Fall sein. Das Verfahren gibt den Entscheidungsträgern verlässlich einen schnellen Überblick über potentiell zur Verfügung stehende Satellitendaten als fundierte Informationsbasis.

Ein großes Thema in der Raumfahrttechnologie wie in anderen Technologiesektoren ist die Ausstattung von Satelliten mit einer künstlichen Intelligenz. Ein ressourceneffizienter Algorithmus kann in diesem Kontext eingesetzt auch direkt an Bord eines Satelliten werden, um die Erdbeobachtungsleistung bspw. durch Schwärme intelligenter Kleinstsatelliten zu optimieren hinsichtlich Wiederholrate und Abdeckung. So wäre es unter Anderem möglich a) Redundanz zu schaffen und die Abdeckung aufrecht zu erhalten, wenn Teile des Schwarms ausfallen, b) im Krisenfall die zeitliche Wiederholrate über einer bestimmten Region automatisch zu erhöhen oder c) die Aufgabenverteilung unter sich ändernden Randbedingungen automatisch anzupassen.

**Patentansprüche**

1. Verfahren zur Bestimmung der Möglichkeit des Zugriffs eines in einem Satelliten enthaltenen Sensors auf eine Zielregion,

   wobei

   zumindest eine Position des Satelliten ermittelt wird, **dadurch gekennzeichnet, dass** für den Fall, dass eine direkte Sichtlinie zwischen dem Satelliten und der Zielregion gegeben ist,
   ein Winkel $\phi$ zwischen einer Satellitenreferenzrichtung und einer auf einen Zielreferenzpunkt in der Zielregion gerichteten Zielrichtung um einen von der Position des Satelliten abhängigen Satellitenpositionspunkt bestimmt wird,
   ein Sichtradius $R_{Sensor}(\phi)$ des Satelliten in Richtung des Winkels $\phi$ ausgehend vom Satellitenpositionspunkt bestimmt wird,
   ein Winkel $\gamma$ zwischen einer Referenzrichtung und einer auf den Satellitenpositionspunkt gerichteten Richtung um den Zielreferenzpunkt bestimmt wird,
   eine Ausdehnung RoT $(\gamma)$ der Zielregion in Richtung des Winkels $\gamma$ ausgehend vom Zielreferenzpunkt bestimmt wird, und
   bestimmt wird, dass die Möglichkeit des Zugriffs gegeben ist, wenn eine Distanz zwischen dem Satellitenpositionspunkt und dem Zielreferenzpunkt kleiner oder gleich der Summe aus dem Sichtradius $R_{Sensor}(\phi)$ des Satelliten und der Ausdehnung RoT $(\gamma)$ der Zielregion in Richtung des Winkels $\gamma$ ist.

2. Verfahren nach dem vorhergehenden Anspruch, wobei der Sichtradius $R_{Sensor}(\phi)$ des Satelliten bestimmt wird, indem ein Betrachtungsbereich, FoR, welches ein Bereich der Erdoberfläche oder eines Referenzellipsoiden ist, der für den Sensor von der Position des Satelliten aus erreichbar ist, durch eine Ellipse oder ein Polygon dargestellt wird und als Sichtradius $R_{Sensor}(\phi)$ der Abstand zwischen dem Satellitenreferenzpunkt und der Ellipse oder dem Polygon in Richtung des Winkels $\phi$ bestimmt wird.

3. Verfahren nach dem vorhergehenden Anspruch, wobei der Sichtradius $R_{Sensor}(\phi)$ bestimmt wird, indem ein Referenzsichtradius RoR $(\phi)$ aus einer Tabelle oder einer Funktion ermittelt wird, in welcher Werte von RoR Werten des Winkels $\phi$ für eine Referenzhöhe $a_{ref}$ des Satelliten zugeordnet sind, und aus dem Referenzsichtradius RoR $(\phi)$ der Sichtradius $R_{Sensor}(\phi)$ für eine aktuelle Höhe a des Satelliten berechnet wird als $R_{Sensor}(\phi) = RoR(\phi)\, a/a_{ref}$, wobei vorzugsweise die Tabelle oder die Funktion vor Beginn des Verfahrens erstellt wurde.

4. Verfahren nach einem der vorhergehenden Ansprüche, wobei die Ausdehnung RoT $(\gamma)$ der Zielregion in Richtung des Winkels $\gamma$ bestimmt wird, indem die Zielregion als Ellipse oder Polygon dargestellt wird und als Ausdehnung RoT $(\gamma)$ der Abstand zwischen dem Zielreferenzpunkt und dieser Ellipse oder diesem Polygon in Richtung des Winkels $\gamma$ bestimmt wird.

5. Verfahren nach dem vorhergehenden Anspruch, wobei die Ausdehnung RoT $(\gamma)$ der Zielregion aus einer Tabelle oder einer Funktion ermittelt wird, in der Werte der Ausdehnung RoT der Zielregion Werten des Winkels $\gamma$ zugeordnet sind, wobei vorzugsweise die Tabelle oder die Funktion vor Beginn des Verfahrens erstellt wurde.

6. Verfahren nach einem der vorhergehenden Ansprüche, wobei die Satellitenreferenzrichtung eine Propagationsrichtung des Satelliten ist und/oder wobei der Zielreferenzpunkt der geometrische Schwerpunkt der Zielregion ist und/oder wobei der Satellitenpositionspunkt der Nadir des Satelliten ist.

7. Verfahren nach einem der vorhergehenden Ansprüche, wobei der Winkel $\gamma$ zwischen der Nordrichtung als Referenzrichtung und einer von dem Zielreferenzpunkt auf einen Nadir des Satelliten weisenden Richtung bestimmt wird.

8. Verfahren nach einem der vorhergehenden Ansprüche, wobei die Position des Satelliten zeitabhängig ermittelt wird, indem Koordinaten des Satelliten zu einem ersten Zeitpunkt, der ein Zeitpunkt des Überschreitens des Horizonts oder ein späterer Zeitpunkt ist, und zu einem zweiten Zeitpunkt, der ein Zeitpunkt des Verschwindens hinter dem Horizont oder ein früherer Zeitpunkt später als der erste Zeitpunkt ist, jeweils gesehen vom Zielreferenzpunkt aus, ermittelt werden und die Positionen des Satelliten für eine Mehrzahl an Zeitpunkten zwischen dem ersten Zeitpunkt und dem zweiten Zeitpunkt bestimmt werden, und wobei für die Mehrzahl der Zeitpunkte bestimmt wird, ob die Möglichkeit des Zugriffs gegeben ist.

9. Verfahren nach einem der vorhergehenden Ansprüche, wobei eine Überlappung eines Betrachtungsbereichs FoR des Satelliten mit der Zielregion bestimmt wird als Überlappungsfläche eines Kreises mit dem Radius $R_{Sensor}(\phi)$ um den Satellitenpositionspunkt und eines Kreises mit dem Radius RoT ($\gamma$) um den Zielreferenzpunkt.

10. Verfahren nach einem der vorhergehenden Ansprüche, wobei eine aktuelle Auflösung des Sensors Res genähert wird als

$$Res = (Res_{ref} * \sqrt{(D^2 + a^2)})/a_{ref},$$

wobei $Res_{ref}$ eine Auflösung des Sensors bei einer Referenzhöhe $a_{ref}$ des Satelliten, a eine aktuelle Höhe des Satelliten und D ein Abstand auf der Erdoberfläche oder dem Referenzellipsoiden zwischen dem Zielreferenzpunkt und dem aktuellen Satellitenpositionspunkt ist.

11. Verfahren nach einem der vorhergehenden Ansprüche, wobei die Möglichkeit des Zugriffs zu zumindest einem Sollzeitpunkt bestimmt wird, indem als die Position des Satelliten dessen Position zum zumindest einen Sollzeitpunkt ermittelt wird und der Winkel $\phi$, der Sichtradius $R_{Sensor}(\phi)$ und der Winkel $\gamma$ zum zumindest einen Sollzeitpunkt bestimmt werden.

12. Verfahren nach einem der vorhergehenden Ansprüche,
wobei nach Bestimmung der Position des Satelliten zunächst bestimmt wird, ob die direkte Sichtlinie zwischen dem Satelliten und der Zielregion gegeben ist und bestimmt wird, dass keine Möglichkeit des Zugriffs gegeben ist, wenn keine direkte Sichtlinie zwischen dem Satelliten und der Zielregion oder dem Zielreferenzpunkt gegeben ist.

13. Satellitenzugriffssystem zur Bestimmung der Möglichkeit des Zugriffs eines in einem Satelliten enthaltenen Sensors auf eine Zielregion, aufweisend eine Positionsermittlungseinheit, die eingerichtet ist zum Ermitteln zumindest einer Position des Satelliten, **dadurch gekennzeichnet, dass** das Satellitenzugriffssystem aufweist:

eine Überlappungsbestimmungseinheit, die eingerichtet ist, einen Winkel $\phi$ zwischen einer Satellitenreferenzrichtung und einer auf einen Zielreferenzpunkt in der Zielregion gerichteten Zielrichtung um einen von der Position des Satelliten abhängigen Satellitenpositionspunkt zu bestimmen,
einen Sichtradius $R_{Sensor}(\phi)$ des Satelliten in Richtung des Winkels $\phi$ ausgehend vom Satellitenpositionspunkt zu bestimmen,
einen Winkel $\gamma$ zwischen einer Referenzrichtung und einer auf den Satellitenpositionspunkt gerichteten Richtung um den Zielreferenzpunkt zu bestimmen,
und eine Ausdehnung RoT ($\gamma$) der Zielregion in Richtung des Winkels $\gamma$ ausgehend vom Zielreferenzpunkt zu bestimmen, und
wobei die Überlappungsbestimmungseinheit eingerichtet ist zu bestimmen, dass die Möglichkeit des Zugriffs gegeben ist, wenn eine Distanz zwischen dem Satellitenpositionspunkt und dem Zielreferenzpunkt kleiner oder gleich der Summe aus dem Sichtradius $R_{Sensor}(\phi)$ des Satelliten und der Ausdehnung RoT ($\gamma$) der Zielregion in Richtung des Winkels $\gamma$ ist.

14. Satellitenzugriffssystem nach dem vorhergehenden Anspruch, wobei das Satellitenzugriffssystem eingerichtet ist, ein Verfahren nach einem der Ansprüche 1 bis 12 auszuführen.

**Claims**

1. Method for determining the possibility of a sensor contained in a satellite to access a target region,

at least one position of the satellite being determined, **characterized in that**, if there is a direct line of sight between the satellite and the target region,
an angle $\phi$ is determined between a satellite reference direction and a target direction that is directed towards a target reference point in the target region around a satellite position point that is dependent on the position of the satellite,
a view radius $R_{sensor}(\phi)$ of the satellite in the direction of the angle $\phi$ is determined starting from the satellite position point,
an angle $\gamma$ is determined between a reference direction and a direction directed towards the satellite position point around the target reference point,

an extension RoT ($\gamma$) of the target region in the direction of the angle $\gamma$ is determined starting from the target reference point, and

it is determined that the possibility for access exists if a distance between the satellite position point and the target reference point is smaller than or equal to the sum of the view radius $R_{sensor}$ ($\phi$) of the satellite and the extension RoT ($\gamma$) of the target region in the direction of the angle $\gamma$.

2. The method according to the preceding claim, wherein the view radius $R_{sensor}$ ($\phi$) of the satellite is determined by determining a field of regard, FoR, which is a region of the Earth's surface or of a reference ellipsoid which can be reached by the sensor from the position of the satellite, is represented by an ellipse or a polygon, and the distance between the satellite reference point and the ellipse or the polygon in the direction of the angle $\phi$ is determined as the view radius $R_{sensor}$ ($\phi$).

3. The method according to the preceding claim, wherein the view radius $R_{sensor}$ ($\phi$) is determined by determining a reference view radius RoR ($\phi$) from a table or a function in which values of RoR are assigned to values of the angle $\phi$ for a reference altitude $a_{ref}$ of the satellite, and by calculating the view radius $R_{sensor}$ ($\phi$) from the reference view radius RoR ($\phi$) for a current altitude a of the satellite as $R_{sensor}$ ($\phi$) = RoR ($\phi$) a/$a_{ref}$, wherein the table or the function preferably having been created prior to the start of the method.

4. The method according to any one of the preceding claims, wherein the extension RoT ($\gamma$) of the target region in the direction of the angle $\gamma$ is determined by representing the target region as an ellipse or a polygon and by determining as the extension RoT ($\gamma$) the distance between the target reference point and this ellipse or this polygon in the direction of the angle $\gamma$.

5. The method according to the preceding claim, wherein the extension RoT ($\gamma$) of the target region is determined from a table or a function in which values of the extension RoT of the target region are assigned to values of the angle $\gamma$, wherein the table or the function preferably having been created prior to the start of the method.

6. The method according to any one of the preceding claims, wherein the satellite reference direction is a propagation direction of the satellite and/or wherein the target reference point is the geometric centroid of the target region and/or wherein the satellite position point is the nadir of the satellite.

7. The method according to any one of the preceding claims, wherein the angle $\gamma$ is determined between the north direction as a reference direction and a direction pointing from the target reference point towards a nadir of the satellite.

8. The method according to any one of the preceding claims, wherein the position of the satellite is determined in a time-dependent manner by determining coordinates of the satellite at a first point in time, which is the point in time at which the satellite crosses the horizon or a later point in time, and at a second point in time, which is a point in time at which the satellite disappears behind the horizon or an earlier point in time later than the first point in time, each viewed from the target reference point, and by determining the positions of the satellite for a plurality of points in time between the first point in time and the second point in time, and wherein it is determined for the plurality of points in time whether the possibility for access exists.

9. The method according to any one of the preceding claims, wherein an overlap of a field of regard FoR of the satellite with the target region is determined as an overlap area of a circle having the radius $R_{sensor}$ ($\phi$) around the satellite position point and a circle having the radius RoT ($\gamma$) around the target reference point.

10. The method according to any one of the preceding claims, wherein a current resolution of the sensor Res is approximated as Res = ($Res_{ref}$ * $\sqrt{(D^2 + a^2)}$)/$a_{ref}$,

where $Res_{ref}$ is a resolution of the sensor at a reference altitude $a_{ref}$ of the satellite, a is a current altitude of the satellite, and D is a distance on the Earth's surface or the reference ellipsoid between the target reference point and the current satellite position point.

11. The method according to any one of the preceding claims, wherein the possibility of access at at least one set point in time is determined by determining, as the position of the satellite, the position thereof at the at least one set point in time and determining the angle $\phi$, the view radius $R_{sensor}$ ($\phi$) and the angle $\gamma$ at the at least one target point in time.

12. The method according to any one of the preceding claims, wherein, after the position of the satellite has been determined, it is first determined whether there is a direct line of sight between the satellite and the target region, and it is determined that no possibility for access exists when there is no direct line of sight between the satellite and the target region or the target reference point.

13. A satellite access system for determining the possibility of a sensor that is contained in a satellite to access a target region, comprising a position determination unit, which is configured to determine at least one position of the satellite, **characterized in that** the satellite access system comprises:

an overlap determination unit, which is configured to determine an angle $\phi$ between a satellite reference direction and a target direction directed towards a target reference point in the target region around a satellite position point that is dependent on the position of the satellite,
to determine a view radius $R_{sensor}$ ($\phi$) of the satellite in the direction of the angle $\phi$ starting from the satellite position point,
to determine an angle $\gamma$ between a reference direction and a direction directed towards the satellite position point around the target reference point, and
to determine an extension RoT ($\gamma$) of the target region in the direction of the angle $\gamma$ starting from the target reference point, and
wherein the overlap determination unit being configured to determine that the possibility for access exists if a distance between the satellite position point and the target reference point is smaller than or equal to the sum of the view radius $R_{sensor}$ ($\phi$) of the satellite and the extension RoT ($\gamma$) of the target region in the direction of the angle $\gamma$.

14. The satellite access system according to the preceding claim, wherein the satellite access system is configured to carry out a method according to any one of claims 1 to 12.

**Revendications**

1. Procédé pour déterminer la possibilité d'accès d'un capteur contenu dans un satellite à une région cible, dans lequel

au moins une position du satellite est déterminée, **caractérisé en ce que** dans le cas où il existe une ligne de visée directe entre le satellite et la région cible,
un angle $\phi$ entre une direction de référence du satellite et une direction de visée dirigée vers un point de référence cible dans la région cible est déterminé autour d'un point de position du satellite qui dépend de la position du satellite,
un rayon visuel $R_{capteur}$ ($\Phi$) du satellite est déterminé dans la direction de l'angle $\phi$ à partir du point de position du satellite,
un angle $\gamma$ entre une direction de référence et une direction dirigée vers le point de position du satellite est déterminé autour du point de référence cible,
une extension RoT ($\gamma$) de la région cible dans la direction de l'angle $\gamma$ est déterminée à partir du point de référence cible, et
on détermine que la possibilité d'accès est donnée lorsqu'une distance entre le point de position du satellite et le point de référence cible est inférieure ou égale à la somme du rayon de vue $R_{capteur}$ ($\phi$) du satellite et de l'étendue RoT ($\gamma$) de la région cible dans la direction de l'angle $\gamma$.

2. Procédé selon la revendication précédente, dans lequel le rayon de vue $R_{capteur}$ ($\Phi$) du satellite est déterminé en représentant une zone d'observation, FoR, qui est une zone de la surface de la Terre ou d'un ellipsoïde de référence accessible au capteur depuis la position du satellite, par une ellipse ou un polygone, et en déterminant comme rayon de vue $R_{capteur}$ ($\phi$) la distance entre le point de référence du satellite et l'ellipse ou le polygone dans la direction de l'angle $\phi$.

3. Procédé selon la revendication précédente, dans lequel le rayon de vue $R_{capteur}$ ($\Phi$) est déterminé en définissant un rayon de vue de référence RoR ($\phi$) à partir d'une table ou d'une fonction dans laquelle des valeurs de RoR sont des valeurs de l'angle $\phi$ pour une hauteur de référence $a_{ref}$ du satellite, et à partir du rayon visuel de référence RoR ($\phi$), on calcule le rayon visuel $R_{capteur}$ ($\phi$) pour une altitude actuelle a du satellite comme $R_{capteur}$ ($\phi$) = RoR ($\phi$) $a/a_{ref}$, la table ou la fonction étant de préférence établie avant le début du procédé.

4. Procédé selon l'une des revendications précédentes, dans lequel on détermine l'étendue RoT ($\gamma$) de la région cible dans la direction de l'angle $\gamma$ en représentant la région cible sous la forme d'une ellipse ou d'un polygone et on détermine comme étendue RoT (γ) la distance entre le point de référence cible et cette ellipse ou ce polygone dans la direction de l'angle γ.

5. Procédé selon la revendication précédente, dans lequel l'étendue RoT (γ) de la région cible est déterminée à partir d'une table ou d'une fonction dans laquelle des valeurs de l'étendue RoT de la région cible sont associées à des valeurs de l'angle γ, de préférence ladite table ou ladite fonction ayant été établie avant le début du procédé.

6. Procédé selon l'une quelconque des revendications précédentes, dans lequel la direction de référence du satellite est une direction de propagation du satellite et/ou dans lequel le point de référence cible est le centre de gravité géométrique de la région cible et/ou dans lequel le point de position du satellite est le nadir du satellite.

7. Procédé selon l'une des revendications précédentes, dans lequel on détermine l'angle γ entre la direction du nord comme direction de référence et une direction orientée depuis le point de référence de la cible vers un nadir du satellite.

8. Procédé selon l'une des revendications précédentes, dans lequel la position du satellite est déterminée en fonction du temps, en déterminant des coordonnées du satellite à un premier instant, qui est un instant de franchissement de l'horizon ou un instant ultérieur, et à un deuxième instant, qui est un instant de disparition derrière l'horizon ou un instant antérieur, ultérieur au premier instant, respectivement vus depuis le point de référence cible, et en déterminant les positions du satellite pour une pluralité d'instants entre le premier instant et le deuxième instant, et dans lequel, pour la pluralité d'instants, on détermine si la possibilité d'accès est donnée.

9. Procédé selon l'une des revendications précédentes, dans lequel un chevauchement d'une zone d'observation FoR du satellite avec la région cible est déterminé comme étant la zone de chevauchement d'un cercle de rayon $R_{capteur}$ (Φ) autour du point de position du satellite et d'un cercle de rayon RoT (γ) autour du point de référence cible.

10. Procédé selon l'une des revendications précédentes, dans lequel une résolution actuelle du capteur Res est approchée comme étant Res = $(Res_{ref} * \sqrt{(D^2 + a^2)})/a_{réf}$,
où $Res_{ref}$ est une résolution du capteur à une altitude de référence $a_{réf}$ du satellite, a est une altitude actuelle du satellite et D est une distance sur la surface de la Terre ou sur l'ellipsoïde de référence entre le point de référence cible et le point de position actuelle du satellite.

11. Procédé selon l'une des revendications précédentes, dans lequel on détermine la possibilité d'accès à au moins un instant de consigne en déterminant, en tant que position du satellite, sa position à au moins un instant de consigne et en déterminant l'angle φ, le rayon de vue $R_{capteur}$ (Φ) et l'angle γ à au moins un instant de consigne.

12. Procédé selon l'une des revendications précédentes, dans lequel, après avoir déterminé la position du satellite, on détermine d'abord si la ligne de visée directe entre le satellite et la région cible est donnée et on détermine qu'aucune possibilité d'accès n'est donnée s'il n'y a pas de ligne de visée directe entre le satellite et la région cible ou le point de référence cible.

13. Système d'accès à un satellite pour déterminer la possibilité d'accès d'un capteur contenu dans un satellite à une région cible, comprenant une unité de détermination de position agencée pour déterminer au moins une position du satellite, **caractérisé en ce que** le système d'accès au satellite comprend :

une unité de détermination de chevauchement agencée pour déterminer un angle φ entre une direction de référence du satellite et une direction de visée dirigée vers un point de référence cible dans la région cible autour d'un point de position du satellite dépendant de la position du satellite,
pour déterminer un rayon visuel $R_{capteur}$ (Φ) du satellite dans la direction de l'angle φ à partir du point de position du satellite,
pour déterminer un angle γ entre une direction de référence et une direction dirigée vers le point de position du satellite autour du point de référence cible,
et une extension RoT (γ) de la région cible dans la direction de l'angle γ à partir du point de référence cible, et dans lequel l'unité de détermination de chevauchement est agencée pour déterminer que la possibilité d'accès est donnée lorsqu'une distance entre le point de position du satellite et le point de référence cible est inférieure ou égale à la somme du rayon visuel $R_{cap-teur}$ (Φ) du satellite et de l'extension RoT (γ) de la région cible dans la direction de l'angle γ.

**14.** Système d'accès au satellite selon la revendication précédente, dans lequel le système d'accès au satellite est configuré pour effectuer un procédé selon l'une des revendications 1 à 12.

A

RoR($\phi$)

7

FoR

6

Satellit

5

1

B

2

3

FoR

Orbithöhe

$R_{Sensor}(\phi)$

1

4

**Fig. 1**

EP 3 980 337 B1

Nadir des Satelliten

$RoR(\phi_3)$

$RoR(\phi_2)$

$RoR(\phi_1)$

Fig. 2

N

8

11

γ

9

RoT(γ)

10

Fig. 3

Fig. 4

Fig. 5

Fig. 6

Bereich: PMRF mit einer zeitlicher Auflösung von 10 Minuten
Hawaii Standardzeit (UTC -10)

12-Jul-18 to 13-Jul-18 (UTC)

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **R. SANDAU.** Status and trends of small satellite missions for Earth observation. *Acta Astronaut.,* 2010, vol. 66 (1-2), 1-12
- Prospects for the Small Satellite Market. *Euroconsult,* 2017
- **J. ADRIAENS ; S. MEGERIAN ; M. POTKONJAK.** Optimal worst-case coverage of directional field-of-view sensor networks. *3rd Annu. IEEE Commun. Soc. Sens. Adhoc Commun. Networks, Secon,* 2006, vol. 1 (C), 336-345
- **D. C. BESTE.** Design of Satellite Constellations for Optimal Continuous Coverage. *IEEE Trans. Aerosp. Electron. Syst.,* 1978, vol. AES-14 (3), 466-473
- **R. D. LÜDERS.** Satellite Networks for Continuous Zonal Coverage. *ARS J.,* 1961, vol. 31 (2), 179-184

- **J. ADRIAENS ; S. MEGERIAN ; M. POTKONJAK.** Optimal worst-case coverage of directional field-of-view sensor networks. *3rd Annu. IEEE Commun. Soc. Sens. Adhoc Commun. Networsk, Secon,* 2006, vol. 1 (C), 336-345
- **P. PARRAUD.** *OREKIT: AN OPEN SOURCE LIBRARY FOR OPERATIONAL FLIGHT DYNAMICS AP-PLICATIONS,* 2010
- **Y. ULYBYSHEV.** Satellite Constellation Design for Complex Coverage. *J. Spacecr. Rockets,* 2008, vol. 45 (4
- **C.-Z. LAN ; J.-S. LI ; S.-J. MA ; Q. XU.** Prediction and analysis of orbital target's visibility based on space-based optics observation. *Guangdian Gongcheng/Opto-Electronic Eng.,* 2008, vol. 35 (12
- **T. VINCENTY.** DIRECT AND INVERSE SOLUTIONS OF GEODESICS ON THE ELLIPSOID WITH APPLICATION OF NESTED EQUATiONS. *Surv. Rev.,* 1975, vol. 23 (176), 88-93